Europäisches Patentamt

European Patent Office

Office européen des brevets

(19)

(11) Publication number: **0 083 218**
**B1**

(12) **EUROPEAN PATENT SPECIFICATION**

(45) Date of publication of patent specification: 22.04.87

(21) Application number: 82306904.2

(22) Date of filing: 23.12.82

(51) Int. Cl.⁴: **C 09 J 3/12,** C 09 J 7/00,
B 29 C 63/20, B 32 B 31/00,
C 08 L 11/00

(54) Elastomer based adhesive compositions.

(30) Priority: 28.12.81 US 335137

(43) Date of publication of application:
06.07.83 Bulletin 83/27

(45) Publication of the grant of the patent:
22.04.87 Bulletin 87/17

(84) Designated Contracting States:
AT BE CH DE FR IT LI NL SE

(56) References cited:
DE-A-2 531 085
US-A-3 595 821
US-A-3 965 061

(73) Proprietor: RAYCHEM CORPORATION
300 Constitution Drive
Menlo Park California 94025 (US)

(72) Inventor: Toy, Lester Tungnan
33235 Pheasant Street
Fremont California, 94536 (US)

(74) Representative: Jay, Anthony William et al
Raychem Limited Intellectual Property Law
Department Faraday Road
Dorcan Swindon SN3 5HH Wiltshire (GB)

Courier Press, Leamington Spa, England.

**Description**

This invention relates to a substantially solvent-free adhesive composition which may be used as a sealant between elongate substrates such as electrical cables and polymeric sleeves recovered thereon.

Dimensionally recoverable articles such as tubular and wraparound sleeves are well known for use in enclosing elongate substrates such as pipes or cables and, in particular, cable joints or splices, and can be sealed to the substrate, if desired, for example using a mastic or hot melt adhesive for heat-recoverable sleeves.

Dimensionally recoverable articles which do not require heat to effect recovery are also well known. Such articles are typically formed of an elastomeric sheet or tube held in an expanded state by a restraining means which can be removed or separated from the elastomeric member to permit it to recover to the unexpanded state. Such articles are also used to enclose elongate substrates and it is also desirable that the recovered article be sealed to the substrate. Generally, contact adhesives have been used for this purpose. The contact adhesive is a solvent based adhesive which can be placed on at least part of the substrate, generally before the recoverable sleeve is placed in position about the substrate. The contact adhesive can be coated on the interior surface of the sleeve, but this has been found inconvenient.

Solvent based contact adhesive used in this manner and applied to the substrate only provides a relatively weak adhesive bond. Further, the adhesive has a paste-like consistency making it difficult to apply it uniformly to the substrate. Non-uniform application can lead to inadequate sealing of the recovered sleeve to the substrate. This in turn creates leak paths through which water can migrate. This is particularly undesirable when the substrate enclosed by the sleeve is a joint between electric cables.

Pressure-sensitive adhesives are also known, for example from German Published Patent Application 2531085, for use on pressure-sensitive adhesive tapes.

This invention provides an adhesive composition, preferably in the form of a self-supporting tape, sheet, film or sleeve for convenient application to an elongate substrate, the flow and adhesive characteristics of the adhesive composition making it particularly suitable for use with a dimensionally recoverable sleeve to seal the recovered sleeve to the substrate.

This invention accordingly provides an adhesive composition consisting essentially of a substantially solvent-free admixture of:

(a) 100 parts of an elastomer selected from slow-crystallising neoprene and epichlorohydrin/ethylene oxide copolymers, said elastomer having a slow rate of crystallization such that after a time period of at least 100 hours has elapsed following subjecting the elastomer to a temperature of 70°C for 30 minutes, the elastomer has a room temperature Shore A hardness of less than 60;

(b) 5 to 200 parts of a tackifier;

(c) 0.5—20 parts of an oxide of a metal of Group Ia, IIa, IIb, IVa or Mn, Tc or Re; and

(d) 0—100 parts of a plasticizer;

said adhesive composition exhibiting a flow of at least 30% at 97°C under a compressive load of 50 grams.

Another aspect of the invention provides a method of enclosing an elongate substrate which comprises:

(a) positioning a dimensionally recoverable sleeve over at least a portion of said substrate;

(b) interposing a layer of the adhesive composition according to this invention between said substrate and said article, and

(c) causing said article to dimensionally recover into intimate contact with said adhesive layer.

Yet another aspect of this invention provides a dimensionally recoverable article comprising:

(a) an expanded elastomeric sheet maintained in the expanded state;

(b) a restraining means for maintaining said elastomeric sheet in the expanded state; and

(c) a layer of the adhesive composition according to this invention on the surface of the elastomeric sheet which is in the direction of dimensional recovery of the sheet.

The neoprene used should be one of the so called slow crystallization grades, such as neoprene WK, WD, WRT, TRT or GRT, which are commercially available grades of neoprene.

The elastomer used in the adhesive composition of this invention is a slow crystallizing elastomer, having a rate of crystallization which can be determined by a procedure which involves heating a sample of the elastomer at 70°C for about 30 minutes. The sample is then cooled to room temperature. The Shore A hardness at room temperature is determined at elapsed time intervals. If after about 100 hours the room temperature Shore A hardness is 60 or less the elastomer is referred to herein as a slow crystallizing elastomer. Preferred elastomers for use in preparing the adhesive composition of this invention have a room temperature Shore A hardness of less than 60 after about 200 hours, and in particular after about 350 hours, following the heat-treatment.

The adhesive composition contains 5—200 parts by weight per 100 parts of elastomer of a tackifier. Tackifiers that can be used include, for example, rosin, modified rosin, rosin derivatives such as rosin salts or rosin esters, hydrocarbon resins, polymerized petroleum hydrocarbons, polyterpenes, phenolic resins, terpene phenolic resins, coumarone-indene resin and the like. The amount of tackifier added to the elastomer depends on the particular elastomer and tackifier used and on the desired end use of the adhesive.

2

# 0 083 218

The tackifier can be present in an amount of about 5 parts by weight to about 200 parts by weight, preferably from about 30 parts by weight to about 100 parts by weight per 100 parts by weight of elastomer.

The adhesive composition preferably contains up to about 20 parts by weight per 100 parts of elastomer of a metal oxide. The metal oxide is preferably an oxide of a Group Ia, IIa, IIb, IVa or VIIb metal of the Periodic Table. (The Periodic Table referred to herein is that found in the "Handbook of Chemistry and Physics" 50th edition, 1969—1970, published by The Chemical Rubber Company). Particularly preferred are the oxides of lead, zinc or magnesium or mixtures of such oxides.

The amount of metal oxide added can be up to about 20 parts by weight per 100 parts by weight of elastomer. Preferably the metal oxide is present in an amount of about 0.5 to about 10 parts by weight and most preferably in an amount of about 1 to about 6 parts by weight per 100 parts by weight of elastomer.

The adhesive composition can also contain a plasticizer. The plasticizer can be present in amounts ranging from 0 to 100 parts by weight per 100 parts by weight of the elastomer. Preferably, the plasticizer will be present in an amount from about 10 to about 80 parts by weight, particularly from about 30 to about 70 parts by weight per 100 parts by weight of the elastomer. The amount of plasticizer used will depend on the particular elastomer used in the adhesive composition also on the nature of the plasticizer.

Typical plasticizers which can be used include, for example, chlorinated paraffins, esters such as dioctyl phthalate or dioctyl adipate, polymeric esters, petroleum oil including aromatic naphthenic and paraffinic oil, and liquid or low molecular weight polymers and elastomers such as low molecular weight polychloroprene, epichlorohydrin polymers, nitrile polymers, polysulfides, polyisoprene, polyisobutylene, polybutene, butyl rubber, polyurethane and the like.

The particular plasticizer selected and the amount used will depend on the elastomer of the adhesive composition. The plasticizer selected should be compatible with the elastomer and promote the desired properties of the adhesive.

The adhesive compositions can contain other additives, for example, antioxidants, acid scavengers, flame retardants, fillers, processing aids and the like.

The adhesive compositions are substantially solvent-free. By substantially solvent-free is meant that no more than about five percent of a solvent is present in the composition. The compositions are generally used in the form of a tape, sheet, film, tubular sleeve or other desired shape. The adhesive compositions have particularly high adhesive strength and can be used with a variety of substrates. Substrates which can be joined using the adhesive compositions of this invention include polymers and elastomers, such as polyethylene, polyvinyl chloride, neoprene, metals such as lead, copper, and the like.

The adhesive compositions can be formed and processed using conventional techniques and equipment. The adhesive components can be added to a mixer such as a two-roll mill, a Sigma (Registered Trade Mark at least in UK) mixer, twin-screw extruder of the type suitable for use with elastomeric materials, and the like. The adhesive can be laminated to one of the substrates to be bonded. In some embodiments it may be convenient to coextrude a polymeric substrate and the adhesive composition forming an integral structure.

The adhesive compositions have high adhesive strength and can be applied to a variety of substrates as mentioned above. It is believed that the flow characteristics of the adhesive compositions of this invention contribute to this high adhesive strength. The ability of the compositions to flow permits adequate wetting of the substrates by the substantially solvent-free adhesive compositions. Flow of the adhesive forming a water-tight seal between the substrates. It is believed that the ability of the compositions to flow indicates that the adhesive compositions are not highly cross-linked.

It has been found that the adhesive compositions should flow at least about 30%, preferably at least about 50%, at 97°C. The flow characteristics are measured, as described in more detail hereinafter, using a thermomechanical analyzer. A sample of the elastomer is placed under a compressive load and the change in thickness of the sample measured. This measurement indicates the degree to which the elastomer flowed under pressure. If the flow is less than about 30% at 97°C, the composition is considered to have insufficient flow to perform satisfactorily as an adhesive.

Examples

Each composition listed in Table I was prepared by adding the components one at a time to a 3 inch roll mill, heated to a temperature of 50 to 80°C. The composition was mixed for a period of time sufficient to obtain a good dispersion, generally about 30—60 minutes. The components and the amount used in each composition in parts by weight is given in Table I.

Flow determination

The flow characteristics of each adhesive composition was determined using a Thermomechanical Analyzer, commercially available from Perkin Elmer Corporation. A sample 1/4" (6 millimetres) in diameter and 0.05 inch (1.25 millimetres) thick was placed in the Thermomechanical Analyzer on the floor of the quartz sample tube. The quartz probe was placed in contact with the sample and a 50 gram load was placed on the probe. The sample was heated from −30°C to +120°C at a heating rate of 5°C per minute. Change in sample thickness were measured at intervals as the sample was heated under the applied load. Flow (97°C) was determined as the percent change in sample thickness, at 97°C, i.e. the ratio of the change in sample thickness to the original sample thickness, multiplied by 100.

The results are shown in Table I.

3

Adhesive strength testing

The compositions were tested to determine their adhesive strength.

A 60 gram sample of each composition was pressed into a slab, 6 inches by 6 inches by 0.050 inch (15 cm×15 cm×1.25 mm), using a press set at 100°C for 8 minutes at 20,000 pounds (9080 kg) pressure. The slab was removed from the hot press and placed in a cold press at 25°C for 5 minutes at 20,000 pounds (9080 kg).

The sample was tested for adhesive strength by cutting the slabs into 1 inch (2.5 cm) strips. The strips were wrapped over a portion of an electric cable having a neoprene outer jacket. A dimensionally recoverable tubular article comprising an expanded neoprene sheet held in the expanded state with a solvent releasable external hold-out layer, was positioned over the adhsive strips wound on the cable. Solvent was applied to release the recoverable neoprene sheet from the hold-out allowing it to recover and shrink into contact with the adhesive coated cable portion. After about 24 hours the cable portion was cut into 1 inch (2.5 cm) samples. The electric wires were removed and the sample was slit open. The neoprene jacket of the cable and the recovered neoprene layer were grasped in an Instron (Registered Trads Mark at least in UK) and pulled apart in a T-peel test. The adhesive strength in pounds per linear inch (PLI) (and kilograms per linear cm (KLC) is given in Table II. The samples were pulled at room temperature at a rate of 50 millimeters per minute. The results are given in Table II. Also noted was whether the sample failed cohesively, that is failure of the adhesive layer, or adhesively, that is failure at the interface between the adhesive and either of the neoprene layers.

Certain of the adhesive compositions were also tested, as above, to bond a recovered neoprene article to a copper tube and to an electric cable with a cross-linked polyethylene outer jacket. In each instance, the adhesive strength was tested using a rolling drum peel test. In this test the tube or cable was not slit open but mounted on a suitable drum. A cut was made through the recovered neoprene sleeve and the adhesive layer and the force needed to separate the adhesive from the copper tube or polyethylene jacket was determined. Whether the failure was cohesive or adhesive was noted.

The Hydrin-bases adhesives were tested by pressing a layer of the adhesive between two ethylene/vinyl acetate copolymer (containing 18% vinyl acetate) sheets to be bonded together at room temperature under contact pressure for 2 minutes. The bonded structure was then subjected to a T-peel adhesive test as described above.

The results of the adhesive strength testing is shown in Table II.

In Table I the following notations are used:

| | |
|---|---|
| Neoprene WRT | — a slow crystallizing grade of neoprene (commercially available from Du Pont) |
| Hydrin 200 | — (an epichlorohydrin-ethylene oxide copolymer commercially available from Goodrich Chemical Company) |
| ZnO | — Zinc Oxide |
| MgO | — Magnesium Oxide |
| CaCO$_3$ | — Calcium Carbonate |
| SP553 | — a terpene phenolic resin (commercially available from Schenectady Chemical Company) |
| FRJ551 | — a reactive phenolic resin (commercially available from Schnectady Chemical Company) |
| Stabelite Ester 10 | — Rosin ester (commercially available from Hercules, Inc.) |
| Neoprene FB | — a low molecular neoprene (commercially available from Du Pont) |
| Hydral | — Alumina trihydrate (commercially available from Alcoa) |
| Octamine | — an amine antioxidant produced by reacting diphenylamine with diisobutylene (commercially available from Vanderbilt Chemical Company) |
| Sb$_2$O$_3$ | — Antimony oxide |
| Chlorowax 70L | — high viscosity grade chlorinated paraffin wax |
| Chlorowax 40 | — low molecular weight chlorinated paraffin wax |
| A097 | — Polyketone resin (commercially available from 40 Chemical Company) |
| Hycar 2216X2 | — a liquid epichlorohydrin homo-polymer (commercially available from B. F. Groodrich Chemical Company) |
| Agerite Resin D | — polymerized 1,2-dihydro-2,2,4-trimethylquinoline, an antioxidant (commercially available from B. F. Goodrich Chemical Company) |

(Hycar is a Registered Trade Mark at least in the U.K.)

0 083 218

TABLE I

| Composition | A | B | C | D | E | F | G | H | I | J | K | L | M | N | O | P | Q | R | S | T |
|---|---|---|---|---|---|---|---|---|---|---|---|---|---|---|---|---|---|---|---|---|
| | | | | | | | Parts by weight | | | | | | | | | | | | | |
| Neoprene WRT | 100 | 100 | 100 | 100 | 100 | 100 | 100 | 100 | 100 | 100 | 100 | 100 | 100 | 100 | 100 | — | — | 100 | 100 | 100 |
| Hydrin 200 | — | — | — | — | — | — | — | — | — | — | — | — | — | — | — | 100 | 100 | — | — | — |
| Neoprene FB | 55 | 55 | 55 | 55 | 55 | — | — | 55 | 55 | 55 | 55 | 55 | 55 | 55 | 55 | — | — | 55 | 55 | 55 |
| Chlorowax 70L | — | — | — | — | — | — | 55 | — | — | — | — | — | — | — | — | — | — | — | — | — |
| Chlorowax 40 | — | — | — | — | — | — | — | — | — | — | — | — | — | — | — | — | — | — | — | 30 |
| Hycar 2216X2 | — | — | — | — | — | — | — | — | — | — | — | — | — | — | — | 50 | 50 | — | — | — |
| ZnO | 3 | 3 | 3 | 3 | 3 | 3 | 3 | — | — | — | 1 | — | — | 1 | — | — | — | 2 | 2 | 3 |
| MgO | 3 | 3 | 3 | 3 | 3 | 3 | 3 | — | — | — | — | 2 | 3 | 3 | 5 | 3 | 3 | 2 | 2 | 3 |
| $CaCO_3$ | — | — | — | — | — | — | — | — | — | — | — | — | — | — | — | 5 | 5 | 50 | 50 | — |
| SP553 | — | 35 | — | — | 70 | 35 | 35 | 35 | 35 | — | 35 | 35 | 35 | 35 | 35 | — | — | — | 35 | 35 |
| FRJ551 | — | — | 35 | — | — | — | — | — | — | 35 | — | — | — | — | — | — | 35 | — | — | — |
| Stabelite Ester 10 | — | — | — | — | — | — | — | — | — | — | — | — | — | — | — | — | — | 35 | — | — |
| A097 | — | — | — | — | — | — | — | — | — | — | — | — | — | — | — | 35 | — | — | — | — |
| Hydral | 35 | 35 | 35 | — | — | 35 | 35 | 35 | 35 | 35 | 35 | 35 | 35 | 35 | 35 | 25 | 25 | — | — | 35 |
| $Sb_2O_3$ | — | — | — | — | — | — | — | — | — | — | — | — | — | — | — | — | — | — | — | 15 |
| Octamine | 3 | 3 | 3 | 3 | 3 | 3 | 3 | — | 3 | 3 | 3 | 3 | 3 | 3 | 3 | — | — | 2 | 2 | 3 |
| Agerite Resin D | — | — | — | — | — | — | — | — | — | — | — | — | — | — | — | 2 | 2 | — | — | — |
| Flow at 97°C (%) | — | — | 70 | — | — | — | 80 | — | 100 | 100 | 100 | 100 | 100 | 100 | 77 | 77 | 100 | — | — | — |

# 0 083 218

TABLE II

| Composition | Substrates | Test method | Adhesive strength (PLI) | (KLC) | Mode of failure* |
|---|---|---|---|---|---|
| A | Neoprene/Neoprene | T-Peel | 15.5 | 2.77 | AF |
| B | Neoprene/Neoprene | T-Peel | 20.7 | 3.70 | CF |
| C | Neoprene/Neoprene | T-Peel | 15.9 | 2.84 | CF |
|   | Neoprene/Polyethylene | Drum | 22.9 | 4.09 | CF/AF |
|   | Neoprene/Copper | Drum | 14 | 1.57 | CF/AF |
| D | Neoprene/Neoprene | T-Peel | 11.3 | 2.02 | AF |
| E | Neoprene/Neoprene | T-Peel | 21.7 | 3.87 | CF/AF |
| F | Neoprene/Neoprene | T-Peel | 22.2 | 3.96 | CF/AF |
| G | Neoprene/Neoprene | T-Peel | 12.4 | 2.21 | CF |
| H | Neoprene/Neoprene | T-Peel | 5.4 | 0.96 | CF |
| I | Noeprene/Neoprene | T-Peel | 14.3 | 2.56 | CF |
| J | Neoprene/Neoprene | T-Peel | 16.1 | 2.87 | CF/AF |
| K | Neoprene/Neoprene | T-Peel | 11.6 | 2.07 | CF |
| L | Neoprene/Neoprene | T-Peel | 14 | 2.50 | CF |
| M | Neoprene/Neoprene | T-Peel | 10.3 | 1.84 | CF |
| N | Neoprene/Neoprene | T-Peel | 16.1 | 2.87 | CF/AF |
| O | Neoprene/Neoprene | T-Peel | 11.3 | 2.02 | CF |
|   | Neoprene/Polyethylene | Drum | 19.8 | 3.54 | CF |
|   | Neoprene/Copper | Drum | 11.5 | 2.06 | CF |
| P | both Ethylene/Vinylacetate | T-Peel | 8.1 | 1.44 | CF |
| Q | both Ethylene/Vinylacetate | T-Peel | 14.3 | 2.56 | CF |
| R | Neoprene/Neoprene | T-Peel | 7.1 | 1.27 | CF |
| S | Neoprene/Neoprene | T-Peel | 8.7 | 1.56 | CF |
| T | Neoprene/Neoprene | T-Peel | 5.9 | 1.06 | CF |

*Mode of Failure—AF=adhesive failure
CF=cohesive failure

As mentioned above, the adhesive compositions of this invention are particularly useful for use with dimensionally recoverable articles to bond the recovered article to a substrate. The dimensionally recoverable article can be a dimensionally heat-recoverable article, such as heat-shrinkable polymeric tubing and wraparound sleeves which are well known. For example, see U.S. Patents Nos. 3,086,242, 3,455,336 and 4,207,364 (the disclosures of which are incorporated herein by reference) for a description of typical articles of this type. Such dimensionally heat-recoverable articles are frequently lined with a mastic or hot melt adhesive. The adhesive compositions of this invention can be used with such heat-recoverable articles. The adhesive composition is interposed between the recoverable article and the substrate. The adhesive can be in the form of a tape, sheet, film, sleeve or laminated to the recoverable article.

The adhesive compositions are particularly suitable for use with dimensionally recoverable articles which do not require heat to cause recovery thereof. The flow and adhesive characteristics of the adhesives of this invention are such that heat is not required to cause the adhesive to flow and wet the substrate or otherwise activate the adhesive. Dimensionally recoverable articles which do not require heat to effect

6

recovery are typically elastomeric articles held under tension in an expanded state. When the means holding the elastomeric member in the expanded state is removed, released or otherwise separated from the expanded elastomeric member, the elastomeric member recovers to its original unexpanded state. The means holding or retaining the elastomeric member in the expanded state can be an internal means such as that disclosed in U.S. Patent No. 3,515,798, but is preferably on external means such as that described in U.S. Patents Nos. 4,070,746, 4,135,553, 4,179,320, 4,287,012, and U.K. patent No. 1,556,677.

The adhesive compositions can be used with dimensionally recoverable articles of this type in the same manner as described above with heat-recoverable articles. The adhesive and flow characteristics of the compositions are such that the adhesive composition flows and wets the inner surface of the recoverable article and the substrate without application of heat. The adhesive compositions can be used at temperatures of 20°C and lower depending on the particular elastomer used in the composition. The adhesive can be laminated to the recoverable elastomeric sheet or can even be coextruded with the elastomeric sheet as it is being produced, if desired.

Dimensionally recoverable articles of this type comprise a recoverable sleeve of elastomeric material and a suitable restraint or hold out means. The sleeve can be an expanded tube of elastomeric material or can be a longitudinal slit tube held under tension. The elastomeric sleeve can be virtually any desired material possessing elastomeric recovery properties. Suitable elastomers include materials such as natural and synthetic polyisoprenes, polybutadiene, styrene-butadiene rubber (SBR), butadiene-acrylonitrile rubber, polychloroprene (Neoprene), butyl rubber, polysulfide, silicone rubber, urethane rubber, polyacrylate, epichlorohydrin homo- and copolymers, propylene oxide rubber, fluorosilicone rubber, fluorocarbon rubber, chlorosulfonated polyethylene, chlorinated polyethylene, ethylenepropylene rubber, nitroso rubber and phosphonitrilic rubber. The properties of the sleeve are, to a large extent, dependent upon the intended use of the sleeve. Thus, if the sleeve is to be used primarily as an electrical insulation, its electrical properties will be of primary importance. On the other hand, if the sleeve will be subjected to much physical abuse, it may be necessary to provide a sleeve which has toughness, good flame resistance, good solvent resistance, etc. For high voltage uses, it may be desirable to have a sleeve which has been made semiconductive by dispersing large amounts of suitable fillers or conductive particles in the sleeve or possesses resistance to tracking and/or erosion.

The adhesive composition used should be compatible with the elastomeric material of the recoverable articles. For example, a neoprene based adhesive can be used with a neoprene recoverable sleeve. Such similarity between the sleeve and adhesive is not, however, essential as the adhesive compositions of this invention are compatible with numerous substrates. The adhesive composition should also be compatible with the substrate to be covered. When the substrate is an elastomeric cable, the adhesive composition can contain additives to improve certain properties such as fire retardancy, electrical properties and the like.

**Claims**

1. An adhesive composition consisting essentially of a substantially solvent-free admixture of:
(a) 100 parts by weight of an elastomer selected from slow-crystallising neoprene and epichlorohydrin/ethylene oxide copolymers, said elastomer having a slow rate of crystallization such that after a time period of at least 100 hours has elapsed following subjecting the elastomer to a temperature of 70°C for 30 minutes, the elastomer has a room temperature Shore A hardness of 60 or less;
(b) 5 to 200 parts by weight of a tackifier;
(c) 0.5—20 parts by weight of an oxide of a metal of Group Ia, IIa, IIb, IVa of the Periodic Table or Mn, Tc or Re; and
(d) 0—100 parts by weight of a plasticizer;
said adhesive composition exhibiting a flow of at least 30% at 97°C under a compressive load of 50 grams.

2. A composition in accordance with Claim 1, wherein said adhesive composition is in the form of a tape, sheet, film or sleeve.

3. A composition in accordance with Claim 2, wherein said adhesive composition is in the form of a self-supporting tape, sheet, film or sleeve.

4. A composition in accordance with any of the preceding claims, wherein said tackifier is present in an amount in the range of from about 30 to about 100 parts by weight per 100 parts by weight of elastomer.

5. A composition in accordance with any of the preceding claims, wherein said tackifier is selected from the group consisting of rosin, modified rosin, hydrocarbon resins, polymerized petroleum hydrocarbons, polyterpenes, coumarone-indene resin.

6. A composition in accordance with any of Claims 1 to 4, wherein said tackifier is a phenolic resin.

7. A composition in accordance with any of Claims 1 to 4, wherein said tackifier is a terpene-phenolic resin.

8. A composition in accordance with any of Claims 1 to 4, wherein said tackifier is a rosin derivative.

9. A composition in accordance with any of the preceding claims, wherein said metal oxide is present in an amount in the range of from about 0.5 to about 10 parts by weight per 100 parts by weight of the elastomer.

10. A composition in accordance with any of the preceding claims, wherein said metal oxide is selected from the group consisting of the oxides of zinc magnesium and lead.

11. A composition in accordance with any of Claims 1 to 9, wherein said metal oxide is zinc oxide.

12. A composition in accordance with any of Claims 1 to 9, wherein said metal oxide is magnesium oxide.

13. A composition in accordance with any of the preceding claims, wherein said plasticizer is present in an amount in the range of from about 10 to about 80 parts by weight per 100 parts by weight of elastomer.

14. A composition in accordance with any of the preceding claims, wherein said plasticizer is a low molecular weight neoprene.

15. An adhesive composition consisting essentially of 100 parts by weight of slow crystallizing neoprene, 30 to 100 parts by weight of a terpene phenolic tackifier, 0.5 to 10 parts by weight of metal oxide selected from the group consisting of zinc oxide, magnesium oxide, and mixtures thereof and 10 to 80 parts by weight of a plasticizer selected from the group consisting of low molecular weight neoprene, chlorinated paraffin wax and mixtures thereof.

16. A dimensionally recoverable article comprising:

(a) an expanded elastomeric sheet maintained in the expanded state;

(b) a restraining means for maintaining said elastomeric sheet in the expanded state; and

(c) a layer of adhesive composition according to claim 1 on the surface of said elastomeric sheet which is in the direction of dimensional recovery of the sheet.

17. A method of enclosing an elongate substrate which comprises:

(a) positioning a dimensionally recoverable article over at least a part of said substrate;

(b) interposing a layer of an adhesive composition according to claim 1 between said substrate and said article, and

(c) causing said article to recover dimensionally into intimate contact with said adhesive layer.

**Patentansprüche**

1. Klebstoffzusammensetzung, im wesentlichen bestehend aus einer im wesentlichen lösungsmittelfreien Mischung aus:

(a) 100 Gew.-Teilen eines Elastomeren, ausgewählt aus langsam-kristallisierendem Neopren und Epichlorhydrin/Ethylenoxid-Copolymeren, wobei das Elastomer eine langsame Kristallisationsgeschwindigkeit aufweist, dergestalt, dass, nachdem folgend auf die Unterwerfung des Elastomeren einer Temperatur von 70°C für 30 min eine Zeit von wenigstens 100 h vergangen ist, das Elastomer eine Shore A-Härte bei Raumtemperatur von 60 oder weniger aufweist;

(b) 5 bis 200 Gew.-Teilen eines Klebrigmachers;

(c) 0,5—20 Gew.-Teilen eines Oxids eines Metalls der Gruppe Ia, IIa, IIb, IVa des Periodensystems oder von Mn, Tc oder Re; und

(d) 0—100 Gew.-Teilen eines Plastifizierers;

wobei die Klebstoffzusämmensetzung einen Fluss von wenigstens 30% bei 97°C unter einer Druckbelastung von 50 g aufweist.

2. Zusammensetzung nach Anspruch 1, worin die Klebstoffzusammensetzung in Form eines Bandes, eines Blattes, einer Folie oder einer Hülse vorliegt.

3. Zusammensetzung nach Anspruch 2, worin die Klebstoffzusammensetzung in Form eines/einer selbsttragenden Bandes, Blattes, Folie oder Hülse vorliegt.

4. Zusammensetzung nach einem der vorstehenden Ansprüche, worin der Klebrigmacher in einer Menge im Bereich von etwa 30 bis etwa 100 Gew.-Teilen pro 100 Gew.-Teile Elastomer vorhanden ist.

5. Zusammensetzung nach einem der vorstehenden Ansprüche, worin der Klebrigmacher ausgewählt wird aus der Gruppe bestehend aus Harz, modifiziertem Harz, Kohlenwasserstoffharzen, polymerisierten Erdölkohlenwasserstoffen, Polyterpenen, Coumaron-Inden-Harz.

6. Zusammensetzung nach einem der Ansprüche 1 bis 4, worin der Klebrigmacher ein Phenolharz ist.

7. Zusammensetzung nach einem der Ansprüche 1 bis 4, worin der Klebrigmacher ein Terpen-Phenolharz ist.

8. Zusammensetzung nach einem der Ansprüche 1 bis 4, worin der Klebrigmacher ein Harzderivat ist.

9. Zusammensetzung nach einem der vorstehenden Ansprüche, worin das Metalloxid in einer Menge im Bereich von etwa 0,5 bis etwa 10 Gew.-Teilen pro 100 Gew.-Teile Elastomer vorhanden ist.

10. Zusammensetzung nach einem der vorstehenden Ansprüche, worin das Metalloxid ausgewählt wird aus der Gruppe, bestehend aus den Oxiden von Zink, Magnesium und Blei.

11. Zusammensetzung nach einem der Ansprüche 1 bis 9, worin das Metalloxid Zinkoxid ist.

12. Zusammensetzung nach einem der Ansrpüche 1 bis 9, worin das Metalloxid Magnesiumoxid ist.

13. Zusammensetzung nach einem der vorstehenden Ansprüche, worin der Plastifizierer in einer Menge im Bereich von etwa 10 bis etwa 80 Gew.-Teilen pro 100 Gew.-Teile Elastomer vorhanden ist.

14. Zusammensetzung nach einem der vorstehenden Ansprüche, worin der Plastifizierer ein Neopren niedrigen Molekulargewichts ist.

15. Klebstoffzusammensetzung, im wesentlichen bestehend aus 100 Gew.-Teilen langsam-kristallisierendem Neopren, 30 bis 100 Gew.-Teilen eines Terpen-phenolischen Klebrigmachers, 0,5 bis 10 Gew.-Teilen Metalloxid, ausgewählt aus der Gruppe bestehend aus Zinkoxid, Magnesiumoxid und Mischungen davon und 10 bis 80 Gew.-Teilen eines Plastifizierers, ausgewählt aus der Gruppe, bestehend aus einem Neopren niedrigen Molekulargewichts, chloriertem Paraffinwachs und Mischungen davon.

16. In den Abmessungen rückstellbarer Gegenstand, enthaltend:

(a) eine im expandierten Zustand gehaltene expandierte elastomere Folie;

(b) ein Verzögerungsmittel, um die elastomere Folie im expandierten Zustand zu halten; und

(c) eine Schicht der Klebstoffzusammensetzung nach Anspruch 1 auf der Oberfläche der elastomeren Folie, welche sich in der Richtung der Dimensionsrückstellung der Folie befindet.

17. Verfahren zum Einschliessen eines länglichen Substrats, welches umfasst:

(a) Positionieren eines in den Abmessungen rückstellbaren Gegenstandes über wenigstens einem Teil des Substrats;

(b) Einbringen einer Schicht einer Klebstoffzusammensetzung nach Anspruch 1 zwischen das Substrat und den Gegenstand; und

(c) Herbeiführen der Dimensionsrückstellung des Gegenstandes in engem Kontakt mit der Klebstoffschicht.

**Revendications**

1. Une composition adhésive constituée essentiellement d'un mélange pratiquement sans solvant de

(a) 100 parties en poids d'un élastomère choisi parmi le néoprène et les copolymères d'épichlorhydrine/oxyde d'éthylène à cristallisation lente, ledit élastomère ayant une faible vitesse de cristallisation telle qu'après qu'une période d'au moins 100 heures se soit écoulée, après que l'élastomère ait été soumis à une température de 70°C pendant 30 minutes, l'élastomère ait une dureté Shore A à la température ordinaire de 60 ou moins;

(b) 5 à 200 parties en poids d'un agent d'adhésivité;

(c) 0,5 à 20 parties en poids d'un oxyde d'un métal des groupes Ia, IIa, IIb, IVa de la classification périodique ou Mn, Tc ou Re; et

(d) 0 à 100 parties en poids d'un plastifiant;

ladite composition adhésive présentant un écoulement d'au moins 30% à 97°C sous une charge de compression de 50 grammes.

2. Une composition selon la revendication 1, dans laquelle ladite composition adhésive est sous forme d'un ruban, d'une feuille, d'une pellicule ou d'un manchon.

3. Une composition selon la revendication 2, dans laquelle ladite composition adhésive est sous forme d'une bande, d'une feuille, d'une pellicule ou d'un manchon autoportants.

4. Une composition selon l'une quelconque des revendications précédentes dans laquelle ledit agent d'adhésivité est présente en une quantité dans la gamme d'environ 30 à environ 100 parties en poids pour 100 parties en poids d'élastomère.

5. Une composition selon l'une quelconque des revendications précédentes dans laquelle ledit agent d'adhésivité est choisi dans le groupe constitué par la colophane, une colophane modifiée, les résines d'hydrocarbures, les hydrocarbures de pétrole polymérisés, les polyterpènes et une résine coumarone-indène.

6. Une composition selon l'une quelconque des revendications 1 à 4 dans laquelle ledit agent d'adhésivité est une résine phénolique.

7. Une composition selon l'une quelconque des revendications 1 à 4, dans laquelle ledit agent d'adhésivité est une résine terpène-phénolique.

8. Une composition selon l'une quelconque des revendications 1 à 4, dans laquelle ledit agent d'adhésivité est un dérivé de colophane.

9. Une composition selon l'une quelconque des revendications précédentes, dans laquelle ledit oxyde métallique est présent en une quantité dans la gamme d'environ 0,5 à environ 10 parties en poids pour 100 parties en poids de l'élastomère.

10. Une composition selon l'une quelconque des revendications précédentes, dans laquelle ledit oxyde métallique est choisi dans le groupe constitué par les oxydes de zinc, de magnésium et de plomb.

11. Une composition selon l'une quelconque des revendications 1 à 9, dans laquelle ledit oxyde métallique est l'oxyde de zinc.

12. Une composition selon l'une quelconque des revendications 1 à 9, dans laquelle ledit oxyde métallique est l'oxyde de magnésium.

13. Une composition selon l'une quelconque des revendications précédentes, dans laquelle ledit plastifiant est présent en une quantité dans la gamme d'environ 10 à environ 80 parties en poids pour 100 parties en poids d'élastomère.

14. Une composition selon l'une quelconque des revendications précédentes, dans laquelle ledit plastifiant est un néoprène de bas poids moléculaire.

15. Une composition adhésive constituée essentiellement de 100 parties en poids de néoprène à cristallisation lente, 30 à 100 parties en poids d'un agent d'adhésivité terpène-phénolique, 0,5 à 10 parties en poids d'un oxyde métallique choisi dans le groupe constitué par l'oxyde de zinc, l'oxyde de magnésium et leurs mélanges et 10 à 80 parties en poids d'un plastifiant choisi dans le groupe constitué par le néoprène de bas poids moléculaire, une cire de paraffine chlorée et leurs mélanges.

**0 083 218**

16. Un article susceptible de rétablissement dimensionnel comprenant:

(a) une feuille élastomère expansée maintenue à l'état expanse;

(b) un dispositif de maintien pour maintenir ladite feuille élastomère à l'état expansé; et

(c) une couche d'une composition adhésive selon la revendication 1 sur la surface de ladite feuille élastomère qui est dans la direction du rétablissement dimensionnel de la feuille.

17. Un procédé pour envelopper un substrat allongé qui consiste à:

(a) mettre en place un article susceptible de rétablissement dimensionnel sur au moins une partie dudit substrate;

(b) interposer une couche d'une composition adhésive selon la revendication 1 entre ladite substrat et ledit article; et

(c) provoquer le rétablissement dimensionnel dudit article en contact intime avec ladite couche adhésive.